# EUROPEAN PATENT SPECIFICATION

(11) **EP 3 145 304 B1**
(45) Date of publication and mention of the grant of the patent: **09.01.2019**
(21) Application number: 14892249.5
(22) Date of filing: 19.05.2014
(51) Int. Cl.: A01K 13/00

(54) **DOG SHOE**
HUNDESCHUH
CHAUSSURE POUR CHIEN

(43) Date of publication of application: 29.03.2017
(73) Proprietor: Yang, Qingbo, Guangzhou, Guangdong 510400 (CN)
(72) Inventor: Yang, Qingbo, Guangzhou, Guangdong 510400 (CN)
(74) Representative: Zaboliene, Reda
(86) International application number: PCT/CN2014/077801
(87) International publication number: WO 2015/176214

(56) References cited:
- CN-U- 202 514 404
- CN-Y- 2 843 058
- JP-A- 2004 215 627
- KR-U- 20090 001 566
- US-A- 5 148 657
- US-A- 6 058 891
- US-A1- 2005 241 188
- US-A1- 2007 039 566
- US-A1- 2007 044 734
- US-A1- 2011 041 779

## Description

### Field of the Invention

The present disclosure relates to a pet shoe, and more particularly to a dog shoe.

### Background of the Invention

As a new object that has been developed in recent decades, a dog shoe has large practical effects. For example, it prevents glass pieces, branches, and ice chips from piercing a dog's foot or has an effect of protecting a paw sole for a search and rescue dog in a geological disaster. It can be used for warm keeping in winter and preventing pads from scalding caused by excessively high temperature of road surfaces in summer, In dog walking, a dog's feet can be kept clean by dog shoes, and also the dog's feet can be protected from snow melting agents in winter. Indoor shoes worn indoors may prevent scratches on floor boards or furniture. Rain boots can avoid dog's wet feet inside a house after a walk in rainy days. Further, a dog shoe has a decorative effect. Dog shoes have wide market demands; however, dog keepers still lack knowledge about dog shoes, which is largely due to undesirability in aspects of practicability and comfort of commercially available dog shoes.

Currently, as for manners of opening, a dog shoe may be opened from front or also from rear or from a side (that is, in which direction a dog's foot is put in the shoe). Comparatively, the manner of opening from front is more convenient for putting in a dog's foot.

Shoe fixing manners mainly include the following. One manner of fastening uses a shoe lace; however, a disadvantage is that it takes a relatively long time to help a dog to put on a shoe, there are also troubles in lace tying, and in such a process, the dog also needs to stay still and cooperate instead of keeping moving; this manner is practically also a manner of fixation on an ankle. Another manner is attachment (hook and loop fastener) fixing or band fixing. Currently, attachment or band fixing is adopted for most dog shoes. An advantage of attachment fixing is convenient detachment and attachment. Also, there is a fixing manner of winding a band on a dog's ankle. In all these fixing manners, a dog's ankle is fastened securely, and long fastening straps further impede movement of joints.

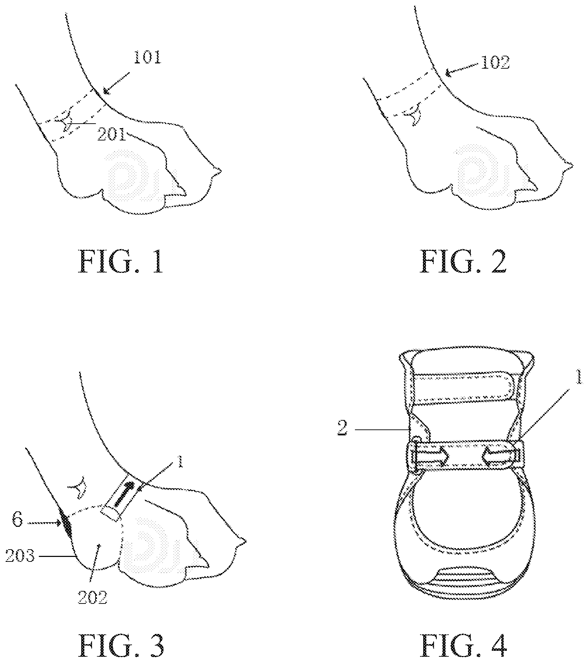

A current dog shoe fixing manner is shown in FIG. 1 and FIG. 2. Both dog shoe fastening strap fix positions 101 and 102 are usually located at positions of a degenerate dewclaw 201 on a dog's front foot or a point above the dewclaw 201, as shown in FIG. 1 and FIG. 2. A disadvantage of a fastening strap being at a dewclaw is that when the fastening strap is fastened securely, the protruding dewclaw or nail is rubbed and the dog's foot gets hurt. In addition, for an existing dog shoe, a dog puts on the shoe and then runs with the dog shoe swinging easily and rubbing downward, making the dog's foot draw outward a little; as a result, the dog's pads step on the rear half of the dog shoe, and the space in front of the dog's foot increases, causing that the dog's foot is no longer in the middle of the dog shoe; this is similar to a case in which a person wears improperly large shoes, so that space is left in front of the toes, and running with such dog shoes produces a rattle and patter. For a shoe with a fastening strap above a dewclaw, either the fastening strap drops in the process that a dog runs, or the fastening strap is fastened very tight, in which case blood flowing of the dog's foot is obstructed and the foot may swell. Therefore, such a dog shoe that is fastened on a dog's ankle by a fastening force from a fastening strap is undesirable for a dog's foot and also causes discomfort, or in severe cases, blood circulation of the dog's foot is affected, causing injuries to the dog's foot.

As an improper dog shoe is uncomfortable for a dog to wear, the dog may sit and refuse to move, hop forward, swing feet or make cries of pain; the shoe falls off during running; joints of the dog's feet are stiff during running; there may also be a phenomenon where a fastening strap is fixed too tight to keep the shoe from falling off but causes the dog's foot to swell; also, a dog often makes abrupt turns during running, and in such cases, such a dog shoe that is fastened on a dog's ankle for fixation may turn aside, causing that the sidewall becomes the sole, or the sole is no longer right below the foot.

In addition, wrinkles may appear at bending positions of a dog shoe after a long time of wear just like the case for a shoe that a person wears, and this issue is not properly handled in current dog shoes. Compared with a human's foot, a dog's foot has higher extent of changes when the dog stands, sits, walks and runs.

The foregoing disclosure of the content of the background technology is only used to make inventive concepts and technical solutions of the present disclosure more comprehensible and does not necessarily belong to the prior art of the patent application. Without any explicit proof indicating that the foregoing content has been disclosed before the filing date of the patent application, the foregoing background technology shall not be used to evaluate the novelty and inventive step of the present application.

KR2020090001566U discloses a dog shoe. The upper of the dog shoe includes an outsole for forming the bottom of the shoe and an insole for forming the inside of the shoe, the upper is formed from the outer circumference of the outsole and encloses the dog's feet and ankles, and a tightening band is formed on the upper, wherein a foot space is formed in such a manner that an upper portion thereof is opened from a prominence formed in front of the upper part, and a foot band is installed through the upper part in the foot space to cover a foot of a dog.

US2011/041779A1 discloses a pet boot having therapeutic properties is worn on a pet's injured or sensitive paw to facilitate healing and or provide protection. The therapeutic pet boot includes an external boot member having a shaft and a paw portion constructed to form a cavity integrated therein appointed to receive an injured paw of a pet. The therapeutic pet boot further includes an internal therapeutic member appointed to be received within the cavity of the external boot member and is appointed to intimately contact the injured paw. The therapeutic pet boot is appointed to be worn on the injured paw of the pet to facilitate healing. The internal therapeutic member may comprise a gel bootee having a massaging gel sole or may comprise a gel inner layer or gel insole. Advantageously, the internal therapeutic member may directly deliver medicament to the paw and/or provide cold treatment or hot treatment therapies to the paw, while providing cushioning, shock absorption and protection from dirt and debris.

US2005/241188A1 discloses a dog shoe that is configured to be worn by a dog comprising a rubberized sole sized for a foot of a dog. The rubberized sole has an exterior portion and an upper portion opposite the exterior portion. The rubberized sole further includes a heel portion and a toe portion. The heel portion is raised in relation to the toe portion. The dog shoe further comprises a shoe wall that comprises a flexible material and that is coupled to at least a perimeter portion of the upper portion of the rubberized sole. The shoe wall includes an elongate opening along an upper portion thereof. The dog shoe further comprises a zipper that is mounted on opposite sides of the elongate opening in the upper portion of the shoe wall, the zipper is also configured to open and close an adjustable ankle opening in the upper portion of the shoe wall. The dog shoe further comprises an elastic ankle cinch that is mounted to the upper portion of the shoe wall. The elastic cinch is configured to cinch open and close the adjustable ankle opening.

### SUMMARY OF THE INVENTION

The main objective of the present disclosure is to provide a dog shoe more comfortable and more practicable for a dog to wear to solve deficiencies in the prior art.

To achieve the foregoing objective, the present disclosure adopts the following technical solution:
A dog shoe according to claim 1 includes a fastening strap, where the fastening strap is configured so that in a fastened state, the fastening strap exerts pulling forces towards the middle of the dog shoe at two side portions of the dog shoe, and the fastening strap is located between a position for placing a dog's dewclaw of the dog shoe and a position for placing the dog's phalangeal joints of the dog shoe.

The technical solution of the present disclosure may further include the following technical features:
In a preferred embodiment, extended lines in the directions of the pulling forces of the fastening strap divide both sides of a counter of the dog shoe into an upper area and a lower area approximately equal in size.

In a preferred embodiment, the counter of the dog shoe approximately has a shape of an arc, and the extended lines in the directions of the pulling forces of the fastening strap are approximately perpendicular to the arc.

In a preferred embodiment, the fastening strap is connected on sidewalls at two sides behind a toe of the dog shoe, and connecting points of the fastening strap are located at horizontal midpoints of the sidewalls or near the horizontal midpoints of the sidewalls.

In a preferred embodiment, an end portion of the fastening strap is fixed at a middle area of a sidewall of the dog shoe.

In a preferred embodiment, an additional layer is fixed on a surface of the sidewall, the additional layer has a shape of diverging in a direction towards the counter of the dog shoe, and the end portion of the fastening strap is fixed at a middle area of the additional layer.

In a preferred embodiment, an additional layer having a shape of diverging in a direction towards the counter of the dog shoe is fixed on a surface of a sidewall of the dog shoe, an end portion of the fastening strap is fixed at an end portion, near an upper surface of the dog shoe, of the additional layer.

In a preferred embodiment, an additional layer having a shape of diverging in a direction towards the counter of the dog shoe is fixed on a surface of a sidewall of the dog shoe, and the fastening strap integrally extends from the additional layer.

In a preferred embodiment, the diverged shape is a sector shape.

In a preferred embodiment, the fastening strap has a slant and inverted Y shape, a fork portion of the Y shape is in a direction towards the counter of the dog shoe, and the fork portion is entirely fixed on a sidewall of the dog shoe.

In a preferred embodiment, an anti-drop cushion disposed on an inner wall of the counter of the dog shoe is further included, and the anti-drop cushion is located at a position of the dog shoe corresponding to an indentation formed above the dog's sole pads.

In a preferred embodiment, the extended lines in the directions of the pulling forces of the fastening strap are located below the anti-drop cushion.

In a preferred embodiment, a material of the anti-drop cushion is sponge.

In a preferred embodiment, the counter of the dog shoe includes a concave arc-shaped wall, and the concave arc-shaped wall is partially located at a position of the dog shoe corresponding to an indentation formed above the dog's sole pads.

In a preferred embodiment, the extended lines in the directions of the pulling forces of the fastening strap are located below the arc-shaped wall.

In a preferred embodiment, a collar extending upward and connected on the sidewalls is further included, and a V-shaped opening that opens forward or in an upper front direction is formed at a connecting position of the collar and the sidewalls.

In a preferred embodiment, the V-shaped opening is located between the position for placing the dog's phalangeal joints of the dog shoe and a position for placing carpal joints of the dog shoe.

In a preferred embodiment, the V-shaped opening is replaced by a V-shaped elastic material connected between the collar and the sidewall.

In a preferred embodiment, a second fastening strap for exerting pulling forces towards the middle at two sides of the collar is connected on the collar.

The fastening strap in the dog shoe of the present disclosure is better than a conventional fixed fastening strap fastened on an ankle. In the present disclosure, the fastening strap of the dog shoe uses can enable the shoe to envelop a dog's instep and sole pads, and also does not restrict normal movement of joints of the instep, sole pads, and paw soles, and advantages of the present disclosure lie in that the dog shoe can be fastened securely on the dog's foot without tight fastening, the dog's foot does not rub around in the dog shoe, movable joints of the dog's foot are not limited, there are only a few restrictions on the dog's foot no matter the dog stands, walks, runs or sits, and it is comfortable for the dog's foot. In contrast to a conventional shoe which can only be roughly fixed through secure fastening of a fastening strap on an ankle, the dog shoe of the present disclosure makes a breakthrough in improving a fixing effect and comfort of the dog shoe.

The fastening strap of the dog shoe of the present disclosure has advantages in several aspects as follows:
Shoe anti-drop: A dog's foot is thoroughly enveloped; when a fastening strap is tightened, it is easy to enable the shoe to hold and fix an instep, sole pads, and a heel area.
Shoe anti-deformation: When a dog runs or makes a sudden movement, the dog shoe is not twisted and deformed because of an external force.
More comfort: When the fastening strap is tied tight, the instep, the sole pads, and the heel area at are all enveloped by the shoe, and the area of force application is increased, making the dog comfortable.

The position of the fastening strap is right on the instep between a dewclaw and phalangeal joints, where the bone is straight and does not affect the movement of joints; also, the fastening strap is located below the dewclaw and the dewclaw is not pressed, and such a position of the fastening strap makes it more comfortable for the dog's foot.

The fastening strap can be fixed with a relatively small, and also blood flowing is not affected.

The fastening strap has high adaptability and has a wide adjustable range for a different size of a dog's foot; the fastening strap is properly tightened or loosened to adapt to different dog's foots, for example, front and rear feet of a same dog.

In a preferred embodiment, an anti-drop cushion is disposed at the rear portion of the dog shoe to adapt to fit concave parts between the sole pads of the dog's foot (this position opens when a dog stretches forward a foot during running and closes when the dog sits). The anti-drop cushion has two advantages: one is a protection effect, and the other is an effect of preventing the dog's pads from rubbing outward and getting stuck when the fastening strap is fastened. When the shoe is tightened, the anti-drop cushion locks the heel, making it comfortable for the dog's foot and also prevents the dog's foot from coming out of the shoe. As it becomes comfortable for the dog's foot, the dog may stop repulsing the dog shoe.

In a preferred embodiment, a V-shaped opening is provided at a connecting position of the collar and the sidewalls. Because the opening of the shoe is usually located at or above carpal joints, and a distance between a dog's carpal joints and phalangeal joints is small, the effect of the V-shaped opening is to make the curvature of the sidewall of the dog shoe bigger facing forward or backward, thereby reducing the restrictions of the sidewall on the carpal joint. Another effect is that when the dog sits, the dog's foot stretches straight, the tension on an instep increases, and the V-shaped opening has an effect of help the dog's foot to stretch straight.

### BRIEF DESCRIPTION OF THE DRAWINGS

The present disclosure will become more fully understood from the detailed description given herein below for illustration only, and thus are not limitative of the present disclosure, and wherein:
FIG. 1 and FIG. 2 are schematic views of a fixing manner of a fastening strap of a conventional dog shoe;
FIG. 3 is a schematic view of a fixing manner of a fastening strap of a dog shoe according to an embodiment of the present disclosure;
FIG. 4 is a schematic front view of a dog shoe according to an embodiment of the present disclosure;
FIG. 5 is a schematic side view of a fastening strap of a dog shoe according to an embodiment of the present disclosure;
FIG. 6 is a schematic side view of a fastening strap of a dog shoe according to another embodiment of the present disclosure;
FIG. 7 is a schematic side view of a fastening strap of a dog shoe according to yet another embodiment of the present disclosure;
FIG. 8 is a schematic side view of a fastening strap of a dog shoe according to a further embodiment of the present disclosure;
FIG. 9 is a schematic view of a position of an anti-drop cushion in a dog shoe according to an embodiment of the present disclosure;
FIG. 10 is a schematic side view of a dog shoe having an anti-drop cushion according to an embodiment of the present disclosure;
FIG. 11 is a schematic side view of a dog shoe having a concave arc-shaped wall according to an embodiment of the present disclosure;
FIG. 12 is a schematic side view of a dog shoe having a V-shaped opening according to an embodiment of the present disclosure;
FIG. 13 is a schematic front view of a dog shoe having a V-shaped opening according to an embodiment of the present disclosure;
FIG. 14 is another schematic side view of a dog shoe having a V-shaped opening according to an embodiment of the present disclosure; and
FIG. 15 is a schematic side view of a dog shoe having a V-shaped elastic material according to an embodiment of the present disclosure.

### DETAILED DESCRIPTION

The present disclosure is described in further detail below with reference to embodiments and the accompanying drawings.

The features and technical advantages of the present disclosure are briefly described above for better understanding of detailed description of the present disclosure. The features and advantages of the present disclosure are illustrated in detail below with reference to the accompanying drawings in the following description. It should be noted that the following illustration is only exemplary rather than to limit the scope and applications of the present disclosure. A person skilled in the art should understand that the disclosed concept and specific embodiments may be readily used as a basis to modify or design other structures to accomplish the same objective of the present disclosure. A person skilled in the art should also understand that these structures do not depart from the scope of the present disclosure. Features regarded as the characteristics of the present disclosure, the structures and operation methods of the features, and further objectives and advantages will be better understood with the help of the following description and accompanying drawings. However, it should be thoroughly understood that provided features are only used for description and illustration without intending to limit the definition of the present disclosure.

Referring to FIG. 3 to FIG. 8, according to the embodiments of the present disclosure, a dog shoe includes a toe 4, sidewalls 2, a counter 3, a sole, and a fastening strap 1. The toe 4 has an upper surface 5. The fastening strap 1 is configured so that in a fastened state, the fastening strap 1 exerts pulling forces F towards the middle of the dog shoe at two side portions 2 of the dog shoe, and the fastening strap 1 is located between a position for placing a dog's dewclaw 201 of the dog shoe and a position for placing the dog's phalangeal joints (not shown) of the dog shoe. A person skilled in the art should understand that the "position for placing a dog's ..." means a position of the shoe corresponding to a corresponding position of a dog's foot after the shoe is normally put on. According to the types or sizes of different dogs, the positions may change correspondingly, and therefore corresponding adjustments may be made to the designs in factors such as a size; however, the adjustment does not depart from the technical concept of the present disclosure.

The sidewalls 2 and the toe 4 may be integrated, or also may be independent from each other. The sidewalls 2 may usually be integrated with the counter 3. The sidewalls 2 are usually approximately symmetrical at two sides.

In use, the fastening strap 1 may enable the shoe to envelop the dog's instep and sole pads 203, and also does not restrict normal movement of joints of the instep, sole pads 203, and paw sole. The advantage of the fastening strap 1 is that the fastening strap 1 does not need to be fastened very tight to prevent the shoe from falling easily, and the dog's foot also does not rub around in the dog shoe, rather than in a conventional shoe that a fastening strap needs to be fastened securely on an ankle for rough fixation.

When the fastening strap is tightened, the area that is subject to effects of the pulling forces F is the area 202 shown in FIG. 3 and the movement of joints are completely not impeded. Because the position of the fastening strap is on the instep between the dewclaw 201 and phalangeal joints, where the bone is straight and therefore movement of carpal joints and the phalangeal joints of the dog's foot are not affected; also, the fastening strap is located below the dewclaw, so that the dewclaw is not pressed, and such a position of the fastening strap does not cause harm to the dewclaw and instead makes it more comfortable for the dog's foot. As movable joints of the dog's foot are not limited by the fastening strap, regardless of whether the dog stands, walks, runs or sits, there are a few restrictions on the dog's foot, and the dog's foot is freer and more comfortable.

When the fastening strap is tightened, the fastening strap exerts pulling forces towards the middle of the dog shoe at two side portions 2 of the dog shoe, and therefore corresponding sidewalls of the dog's foot sole pads 203 to the instep are tightened together, just like that when a person's sports shoe is tightened, the instep and heel are also tightened; also, the fastening strap has a wide adjustable range for the size of a dog's foot; even if a dog's foot is slightly smaller than the shoe, the shoe can also restrict the instep and heel, so that when a same dog has a front foot slightly bigger than a rear foot, the dog can also wear shoes of a same size.

The fastening strap is fixed on the sidewall. An advantage of this is that when the fastening strap is tightened, two sides of the shoe envelop at the same time, so that forces are evenly exerted, the shoe does not fall easily, further the surface of the shoe does not deform, the instep is desirably enveloped, the shoe is not twisted aside under a force in fast running and at abrupt turns, and further blood circulation is not impeded.

Various designs may be adopted for the fastening strap 1. For example, attachment fixing using a hook and loop fastener or band fixing may be adopted. There may be only one fastening strap 1 on one sidewall 2, or may also be two fastening straps 1 that are approximately disposed symmetrically. For example, two bands may be symmetrically disposed on two sidewalls 2 and are tied in the middle; or one band also may be disposed on the sidewall 2 at one side, a buckle is disposed on the sidewall 2 at the other side, and the band is fixed by using the buckle.

Extended lines in the directions of the pulling forces of the fastening strap 1 may divide both sides of the counter 3 of the dog shoe into an upper area and a lower area approximately equal in size. Such a design may make forces evenly exerted on side portions of the shoe, so that the dog's foot becomes more stable inside the shoe and also the dog feels more comfortable.

The counter 3 of the dog shoe may approximately have a shape of an arc, and the extended lines in the directions of the pulling forces of the fastening strap 1 may be approximately perpendicular to the arc. The design of the arc-shaped counter 3 may further adapt to the characteristics of a dog's foot; the configuration of the fastening strap 1 is designed as above for the arc-shaped counter 3, the dog's foot becomes more stable inside the shoe, and also the dog feels more comfortable.

The fastening strap 1 may be connected on sidewalls 2 at two sides behind the toe 4 of the dog shoe, and connecting points of the fastening strap are located at horizontal midpoints of the sidewalls 2 or near the horizontal midpoints of the sidewalls 2. Such an arrangement helps to further optimize the force applying area of the fastening strap 1, so that the dog shoe has a better enveloping effect for the dog's foot.

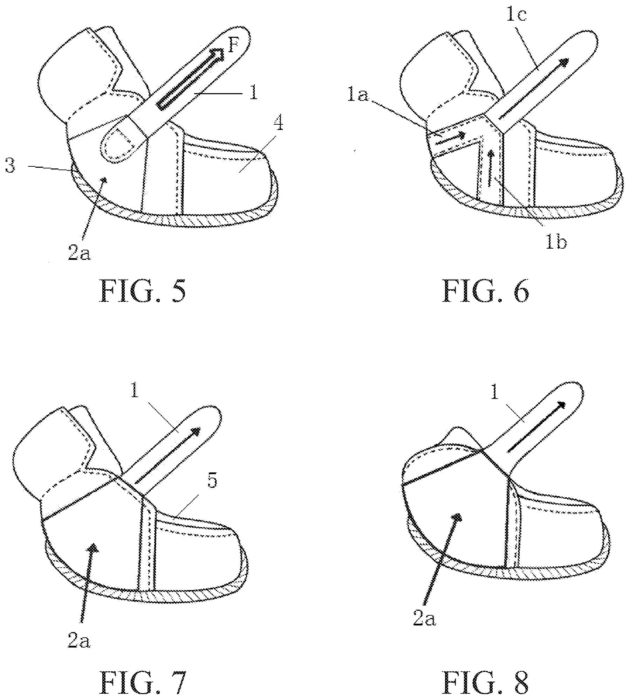

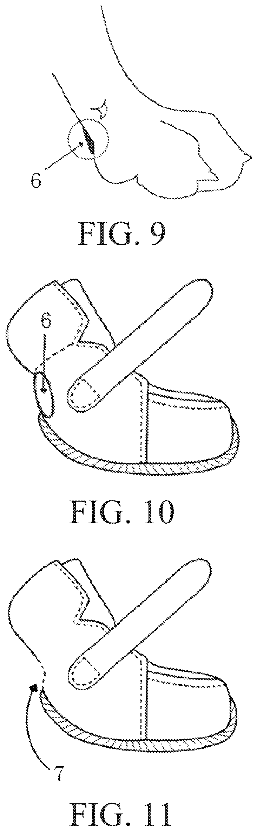

As shown in FIG. 10, an end portion of the fastening strap 1 may be directly fixed at a middle area of the sidewall 2 of the dog shoe. As shown in FIG. 5, preferably, an additional layer 2a may be fixed on the surface of the sidewall 2, the additional layer 2a has a shape of diverging in a direction towards the counter 3 of the dog shoe, and the end portion of the fastening strap 1 is fixed at the middle area of the additional layer 2a. The shape of the additional layer 2a may be a sector shape.

As shown in FIG. 6, the fastening strap 1 may be a slant and inverted Y shape, a fork portion of the Y shape is in a direction towards the counter of the dog shoe, the fork portions la, 1b of the Y-shaped fastening strap are entirely fixed on the surface of the sidewall 2 of the dog shoe, and the free portion 1c of the Y-shaped fastening strap extends towards the sidewall on the other side.

As shown in FIG. 7, an additional layer 2a having a shape of diverging in a direction towards the counter 3 of the dog shoe may be fixed on the surface of the sidewall 2 of the dog shoe, and the end portion of the fastening strap is fixed at the end portion, near the upper 5, of the additional layer 2a.

As shown in FIG. 8, an additional layer 2a having a shape of diverging in a direction towards the counter 3 of the dog shoe may be fixed on the surface of the sidewall 2 of the dog shoe, and the fastening strap extends integrally from the sector-shaped additional layer 2a.

As shown in FIG. 3, FIG. 9, and FIG. 10, the dog shoe may further include an anti-drop cushion 6 disposed on an inner wall of the counter 3 of the dog shoe, and the anti-drop cushion 6 is located at a position of the dog shoe corresponding to an indentation formed above the dog's sole pads 203. Sponge may be adopted for the anti-drop cushion 6. More preferably, the extended lines in the directions of the pulling forces of the fastening strap 1 are located below the anti-drop cushion 6.

As shown in FIG. 11, the counter 3 of the dog shoe may further include a concave arc-shaped wall 7, and the concave arc-shaped wall 7 is partially located at a position of the dog shoe corresponding to an indentation formed above the dog's sole pads 203.

Because the indentation is a position where the dog's paw sole and ankle are connected, and this position of the dog's foot also has the minimum measurement of the dog's foot, the anti-drop cushion 6 is placed protruding on the inner wall of the counter 3 of the dog shoe, or an indentation is processed at the corresponding position of the counter 3, so as to lock the sole pads 203, thereby effectively preventing the dog's foot from drawing outward to come out of the shoe. The anti-drop cushion 6 also has a protection effect; because the movement of this position has a large extent of movement during the movement of the dog's foot, an anti-drop cushion used here can prevent frequent abrasions, so as to achieve the protection effect and minimize the harm.

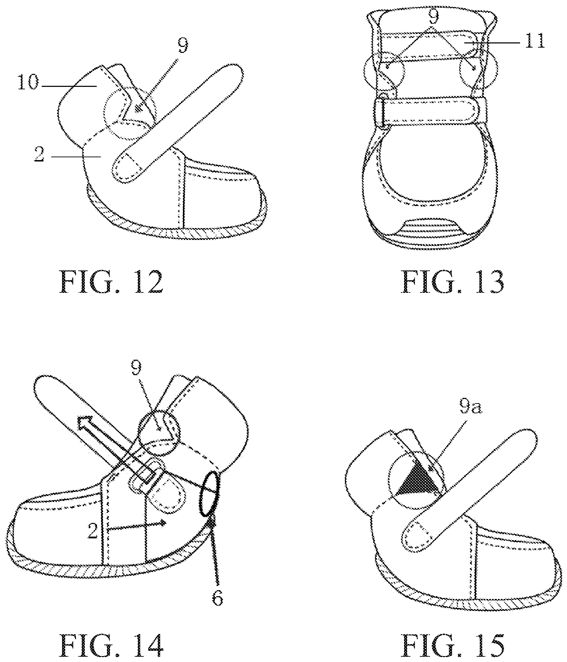

As shown in FIG. 12, FIG. 13, and FIG. 14, the dog shoe may further include a collar 10 extending upward and connected on the sidewalls 2. A V-shaped opening that opens forward or in an upper front direction 9 is formed at a connecting position of the collar 10 and the sidewalls 2. The design of the V-shaped opening 9 may increase an extent of bending forward and backward of the dog's foot when the dog moves or sits, so as to reduce the restrictions on the forward and backward bending of the dog's foot and increase the extent of bending. More preferably, the V-shaped opening 9 is located between the position for placing the dog's phalangeal joints of the dog shoe and a position for placing carpal joints of the dog shoe, where the optimal effect is achieved.

As shown in FIG. 15, alternatively, the V-shaped opening 9 may also be replaced by a V-shaped elastic material 9a connected between the collar 10 and the sidewall 2, and the V-shaped elastic material 9a may also achieve a similar effect.

As shown in FIG. 13, a second fastening strap 11 for exerting pulling forces towards the middle at two sides of the collar 10 may further be connected on the collar 10. The second fastening strap 11 may achieve a function of enhancing a fastening effect of the dog shoe.

### Material of the shoe

As for sole materials, rubber, TPR or PVC is usually adopted to make a sole, or leather or anti-slip cloth is adopted for a sole. Rubber is seldom adopted for a sole at present, because rubber is rigid, low in flexibility, and high in production cost, both mold cost and material cost being higher than other materials; however, the advantage is that rubber is wear resistant. The material of TPR is relatively soft and is suitable for the movement of a dog's foot; TPR also has a desirable anti-slip effect and is light in weight, and is not subject to physical changes in cold and tropic regions. PVC is the most common sole, though has an anti-slip effect less desirable than TPR; PVC turns hard at a temperature below zero, has low flexibility, and is not suitable for use in winter. The advantage of the leather sole is softness; however, a sole using the leather surface is undesirable in terms of an anti-slip effect, turns hard in meeting water, and is also not easy to clean. A sole made of anti-slip cloth is not wear resistant, because rubber particles on the material surface are worn soon.

PU fabric is usually adopted as the material for an upper of a winter shoe, or a cloth material may be used. The advantage of PU fabric is its desirable softness; PU fabric does not become hard even at 30 degrees below zero; however, the disadvantage is that PU fabric ages easily and cannot be stored long, and PU fabric can usually be stored for about 3 to 5 years with good ventilation and no direct light radiation. The cloth material is better than PU fabric in terms of aging, but colors on the cloth material come off easily, and colors easily permeate into the shoe because of snow in winter. A relatively preferable material is a microfiber material and is made of long fiber, of which the softness, feel, and wear resistance are just like leather but the microfiber material does not turn hard in meeting water like feather, though the disadvantage is high production cost. The microfiber fabric may be adopted for a large part of an upper.

Mesh fabric may be adopted for summer and spring/autumn shoes, and the mesh fabric is air permeable and light in weight.

Although the present disclosure and its advantages are described in detail, it should be understood that various changes, replacements, and variations may be made without departing from scope of the present disclosure. In addition, the application scope of the present disclosure is not limited to specific embodiments of processes, machines, fabrication, material composition, manners, methods, and steps described in the specification. As from the disclosure of the present disclosure, a person skilled in the art may easily make use of processes, machines, fabrication, material composition, manners, methods or steps that exist already or are to be developed in the future and essentially execute the same functions or implement the same results as the corresponding embodiments described here. Although the present disclosure is described above in further detail through specific embodiments, the present disclosure is not limited to the specific embodiments.

## Claims

1. A dog shoe, comprising a fastening strap (1), wherein the fastening strap (1) is configured so that in a fastened state, the fastening strap (1) exerts pulling forces towards the middle of the dog shoe at two side portions of the dog shoe, and the fastening strap (1) is located between a position for placing a dog's dewclaw of the dog shoe and a position for placing the dog's phalangeal joints of the dog shoe; **characterized in that** an anti-drop cushion (6) is disposed protruding on an inner wall of the counter (3) of the dog shoe, and the anti-drop cushion (6) is located at a position of the dog shoe corresponding to an indentation formed above the dog's sole pads (203), wherein extended lines in the directions of the pulling forces of the fastening strap (1) are located below the anti-drop cushion (6) or **in that** the counter (3) of the dog shoe comprises a concave arc-shaped wall (7), and the concave arc-shaped wall (7) is partially located at a position of the dog shoe corresponding to an indentation formed above the dog's sole pads, wherein the extended lines in the directions of the pulling forces of the fastening strap (1) are located below the arc-shaped wall (7).

2. The dog shoe according to claim 1, **characterized in that** the extended lines in the directions of the pulling forces of the fastening strap divide both sides of the counter (3) of the dog shoe into an upper area and a lower area substantially equal in size.

3. The dog shoe according to claim 1 or 2, **characterized in that** the counter (3) of the dog shoe substantially has a shape of an arc, and the extended lines in the directions of the pulling forces of the fastening strap (1) are substantially perpendicular to the arc.

4. The dog shoe according to any one of claims 1 to 3, **characterized in that** an additional layer (2a) having a shape of diverging in a direction towards the counter (3) of the dog shoe is fixed on a surface of a sidewall (2) of the dog shoe, and an end portion of the fastening strap is fixed at an end portion, near an upper surface (5) of the dog shoe, of the additional layer (2a).

5. The dog shoe according to any one of claims 1 to 3, **characterized in that** an additional layer (2a) having a shape of diverging in a direction towards the counter (3) of the dog shoe is fixed on a surface of a sidewall (2) of the dog shoe, and the fastening strap integrally extends from the additional layer (2a).

6. The dog shoe according claim 4 or 5, **characterized in that** the diverged shape is a sector shape.

7. The dog shoe according to any one of claims 1 to 3, **characterized in that** the fastening strap has a slant and inverted Y shape, a fork portion of the Y shape is in a direction towards the counter (3) of the dog shoe, and the fork portion is entirely fixed on a sidewall (2) of the dog shoe.

8. The dog shoe according to any one of claims 1 to 7,, **characterized in that** a material of the anti-drop cushion (6) is sponge.

9. The dog shoe according to any one of claims 1 to 8, **characterized by** further comprising a collar (10) extending upward and connected on the sidewalls (2), and a V-shaped opening (9) that opens forward or in an upper front direction is formed at a connecting position of the collar (10) and the sidewalls (2).

10. The dog shoe according to claim 9, **characterized in that** the V-shaped opening (9) is located between the position for placing the dog's phalangeal joints of the dog shoe and a position for placing carpal joints of the dog shoe.

11. The dog shoe according to claim 9 or 10, **characterized in that** the V-shaped opening (9) is replaced by a V-shaped elastic material connected between the collar (10) and the sidewall (2).

12. The dog shoe according to any one of claims 9 to 11, **characterized in that** a second fastening strap (11) for exerting pulling forces towards the middle at two sides of the collar (10) is connected on the collar (10).

## Patentansprüche

1. Hundeschuh, umfassend einen Schnürsenkel (1), der derart dazu konfiguriert ist, dass er in einem gebundenen Zustand eine auf die Mitte des Hundeschuhs gerichtete Zugkraft auf beide Seitenabschnitte des Hundeschuhs ausübt und sich zwischen einer Position des Hundeschuhs zum Platzieren der Wolfzehe eines Hundes und einer Position des Hundeschuhs zum Platzieren des Zehengelenks des Hundes befindet; **dadurch gekennzeichnet, dass** der Hundeschuh eine an der Innenwand einer Hinterkappe (3) des Hundeschuhs hervorstehend angeordnete Halteunterlage (6) umfasst, die sich an einer einer oberhalb eines Sohlenpolsters (203) des Hundes ausgebildeten Vertiefung entsprechenden Position des Hundeschuhs befindet, wobei eine Erstreckungslinie der Zugrichtung des Schnürsenkels (1) sich unterhalb der Halteunterlage (6) befindet; oder **dadurch gekennzeichnet, dass** die Hinterkappe (3) des Hundeschuhs eine nach innen konkave bogenförmige Wand (7) umfasst, die sich teilweise an einer einer oberhalb eines Sohlenpolsters des Hundes ausgebildeten Vertiefung entsprechenden Position des Hundeschuhs befindet, wobei eine Erstreckungslinie der Zugrichtung des Schnürsenkels (1) sich unterhalb der bogenförmigen Wand (7) befindet.

2. Hundeschuh nach Anspruch 1, **dadurch gekennzeichnet, dass** die Erstreckungslinie der Zugrichtung des Schnürsenkels die Hinterkappe (3) des Hundeschuhs in einen oberen und unteren Bereich mit einer im Wesentlichen gleichen Fläche aufteilt.

3. Hundeschuh nach Anspruch 1 oder 2, **dadurch gekennzeichnet, dass** die Hinterkappe (3) des Hundeschuhs im Wesentlichen kreisbogenförmig ausgebildet ist, wobei die Erstreckungslinie der Zugrichtung des Schnürsenkels (1) im Wesentlichen vertikal zu dem Kreisbogen ausgerichtet ist.

4. Hundeschuh nach einem der Ansprüche 1 bis 3, **dadurch gekennzeichnet, dass** an einer Seitenkappe (2) des Hundeschuhs eine zusätzliche Schicht (2a) in einer auf die Hinterkappe (3) des Hundeschuhs hin zerstreuten Form befestigt ist, wobei ein Endabschnitt des Schnürsenkels an einem einem Schuhblatt (5) zugewandten Endabschnitt der zusätzlichen Schicht (2a) befestigt ist.

5. Hundeschuh nach einem der Ansprüche 1 bis 3, **dadurch gekennzeichnet, dass** an einer Seitenkappe (2) des Hundeschuhs eine auf die Hinterkappe (3) des Hundeschuhs zerstreute zusätzliche Schicht (2a) befestigt ist, wobei sich das Schnürsenkel einteilig von der zusätzlichen Schicht (2a) nach außen erstreckt.

6. Hundeschuh nach Anspruch 4 oder 5, **dadurch gekennzeichnet, dass** es sich bei der zerstreuten Form um eine Fächerform handelt.

7. Hundeschuh nach einem der Ansprüche 1 bis 3, **dadurch gekennzeichnet, dass** der Schnürsenkel eine geneigte umgekehrte Y-Form aufweist, wobei ein Gabelungsabschnitt der Y-Form der Richtung der Hinterkappe (3) des Hundeschuhs zugewandt ist, während der Gabelungsabschnitt einteilig an der Seitenkappe (2) des Hundeschuhs befestigt ist.

8. Hundeschuh nach einem der Ansprüche 1 bis 7, **dadurch gekennzeichnet, dass** die Halteunterlage (6) aus Schwamm hergestellt ist.

9. Hundeschuh nach einem der Ansprüche 1 bis 8, **dadurch gekennzeichnet, dass** der Hundeschuh weiterhin einen an die Seitenkappe (2) angeschlossenen, sich nach oben erstreckenden Schuhkragen (10) umfasst, wobei an der Verbindungsstelle zwischen dem Schuhkragen (10) und der Seitenkappe (2) eine nach vorne oder nach oben vorne geöffnete V-förmige Öffnung (9) ausgebildet ist.

10. Hundeschuh nach Anspruch 9, **dadurch gekennzeichnet, dass** die V-förmige Öffnung (9) sich zwischen einer Position des Hundeschuhs zum Platzieren des Zehengelenks eines Hundes und einer Position des Hundeschuhs zum Platzieren des Handgelenks des Hundes befindet.

11. Hundeschuh nach Anspruch 9 oder 10, **dadurch gekennzeichnet, dass** die V-förmige Öffnung (9) durch ein zwischen dem Schuhkragen (10) und der Seitenkappe (2) geschaltetes V-förmiges elastisches Material ersetzt wird.

12. Hundeschuh nach einem der Ansprüche 9 bis 11, **dadurch gekennzeichnet, dass** an den Schuhkragen (10) ein zweiter Schnürsenkel (11) zum Ausüben einer zur Mitte des Schuhkragens gerichtete Zugkraft auf beide Seiten des Schuhkragens (10) angeschlossen ist.

## Revendications

1. Une chaussure pour chien, comprenant un lacet (1), dans laquelle ledit lacet (1) est configuré à l'état lacé, ledit lacet (1) exerce une force de traction des deux parties latérales de ladite chaussure pour chien vers le centre de ladite chaussure pour chien, en outre ledit lacet (1) est agencé entre la position de ladite chaussure pour chien destinée au placement de l'ergot du chien et la position de ladite chaussure pour chien destinée au placement des articulations des orteils du chien ; **caractérisée en ce que**, un coussinet de retenue de patte (6) fait saillie depuis la partie interne de la tige arrière (3) de la chaussure , en outre ledit coussinet de retenue de patte (6) est agencé sur la dépression formée à la partie supérieure de ladite chaussure pour chien correspondant au coussinet de la plante de patte du chien (203), dans lequel la ligne de prolongement du sens de traction dudit lacet (1) est agencée à la partie inférieure dudit coussinet de retenue de patte (6) ; ou est **caractérisé en ce que**, ladite tige arrière (3) de la chaussure comprend une paroi concave interne incurvée (7), en outre ladite paroi concave interne incurvée (7) est partiellement agencée à la dépression formée à la partie supérieure de ladite chaussure pour chien correspondant au coussinet de la plante de patte du chien , dans laquelle la ligne de prolongement du sens de traction dudit lacet (1) est agencée à la partie inférieure de ladite paroi concave interne incurvée (7).

2. Une chaussure pour chien selon la revendication 1, **caractérisée en ce que**, la ligne de prolongement du sens de traction dudit lacet divise ladite tige arrière (3) de la chaussure de ladite chaussure pour chien en deux zones, supérieure et inférieure, de dimensions approximativement égales.

3. Une chaussure pour chien selon la revendication 1 ou 2, **caractérisée en ce que**, ladite tige arrière (3) de la chaussure est approximativement en forme d'arc de cercle, la ligne de prolongement du sens de traction dudit lacet (1) étant approximativement perpendiculaire audit arc de cercle.

4. Une chaussure pour chien selon l'une quelconque des revendications 1 à 3, **caractérisée en ce que**, la surface de la tige latérale de la chaussure (2) de ladite chaussure pour chien est dotée d'une couche supplémentaire (2a) de forme divergente faisant face à la tige arrière (3) de la chaussure de ladite chaussure pour chien, l'extrémité dudit lacet étant fixée à l'extrémité de la surface de chaussure (5) de ladite couche supplémentaire (2a).

5. Une chaussure pour chien selon l'une quelconque des revendications 1 à 3, **caractérisée en ce que**, la surface de la tige latérale de la chaussure (2) de ladite chaussure pour chien est dotée d'une couche supplémentaire (2a) en forme divergente faisant face à la tige arrière de la chaussure (3) de ladite chaussure pour chien, ledit lacet s'étirant de façon monobloc depuis ladite couche supplémentaire (2a).

6. Une chaussure pour chien selon l'une quelconque des revendications 4 ou 5, **caractérisée en ce que**, ladite forme divergente est une forme d'éventail.

7. Une chaussure pour chien selon l'une quelconque des revendications 1 à 3, **caractérisée en ce que**, ledit lacet est en forme de Y incliné renversé, la partie en fourche de la forme de Y faisant face au sens de la chaussure (3) de ladite chaussure pour chien, ladite partie en fourche étant en outre intégrée et fixée sur ladite tige latérale de la chaussure (2).

8. Une chaussure pour chien selon l'une quelconque des revendications 1 à 7, **caractérisée en ce que**, le matériau dudit coussinet de retenue de patte (6) est en éponge.

9. Une chaussure pour chien selon l'une quelconque des revendications 1 à 8, **caractérisée en ce que**, elle comprend en outre un col (10) connecté à ladite tige latérale de la chaussure (2) et s'étirant vers le haut, la connexion dudit col (10) et de ladite tige latérale de la chaussure (2) formant une ouverture en forme de V (9) ouverte vers l'avant ou vers la partie supérieure avant.

10. Une chaussure pour chien selon la revendication 9, **caractérisée en ce que**, ladite ouverture en forme de V (9) est agencée entre la position de ladite chaussure pour chien destinée au placement des articulations des orteils du chien et la position de ladite chaussure pour chien destinée au placement de l'articulation du carpe.

11. Une chaussure pour chien selon la revendication 9 ou 10, **caractérisée en ce que**, ladite ouverture en forme de V (9) est remplacée par un matériau élastique en forme de V connecté entre ledit col (10) et ladite tige latérale de la chaussure (2).

12. Une chaussure pour chien selon l'une quelconque des revendications 9 à 11, **caractérisée en ce que**, un deuxième lacet (11) destiné à exercer une force de traction entre les deux côtés dudit col (10) est connecté audit col (10).
